(19) Europäisches Patentamt / European Patent Office / Office européen des brevets

(11) **EP 1 199 288 B1**

(12) **EUROPÄISCHE PATENTSCHRIFT**

(45) Veröffentlichungstag und Bekanntmachung des Hinweises auf die Patenterteilung:
**28.11.2012 Patentblatt 2012/48**

(51) Int Cl.:
***C03C 17/00*** *(2006.01)*

(21) Anmeldenummer: **01122633.9**

(22) Anmeldetag: **27.09.2001**

(54) **Wässrige Beschichtungslösung für abriebfeste SiO2-Antireflexschichten**

Aqueous coating solution for abrasion resistant SiO2 anti-reflective layers

Solution de revêtement aqueuse pour des couches SiO2 anti-réfléchissantes résistantes à l'abrasion

(84) Benannte Vertragsstaaten:
**AT BE CH CY DE DK ES FI FR GB GR IE IT LI LU MC NL PT SE TR**

(30) Priorität: **18.10.2000 DE 10051725**

(43) Veröffentlichungstag der Anmeldung:
**24.04.2002 Patentblatt 2002/17**

(73) Patentinhaber: **Merck Patent GmbH
64293 Darmstadt (DE)**

(72) Erfinder:
• **Kursawe, Monika, Dr.
64342 Seeheim-Jugenheim (DE)**
• **Glaubitt, Walther
97276 Margetshöchheim (DE)**

(56) Entgegenhaltungen:
**DE-A- 19 828 231 US-A- 4 775 520**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine stabile, wäßrige Lösung aus $[SiO_x(OH)_y]_{-n}$ Partikeln zur Herstellung einer abriebfesten, porösen $SiO_2$-Antireflexschicht auf Substraten, vorzugsweise Glas, sowie ein Verfahren zur Herstellung dieser Lösung. Die poröse $SiO_2$-Antireflexschicht erhöht die Transmission von Licht über das gesamte solare Spektrum. Glas, das mit einer derartigen, porösen $SiO_2$-Antireflexschicht versehen ist, eignet sich daher besonders für Abdeckungen von Sonnenkollektoren und photovoltaische Zellen.

Zur Beschichtung von Gläsern mit dem Ziel, die Transmission von Licht zu erhöhen, existieren mehrere Verfahren. Üblich ist das Aufbringen von Interferenzschichten. Hierbei werden abwechselnd zwei oder mehr Schichten hoch- bzw. niedrigbrechender Materialien übereinander aufgebracht. In einem bestimmten Wellenlängenbereich löschen sich dann die reflektierten Wellen aus. Ein Beispiel hierfür sind Antireflexschichten auf Architekturglas der Firma Schott Glaswerke, die über ein Sol-Gel-Verfahren hergestellt und über Tauchbeschichtungen aufgebracht werden. Die Frequenzbandbreite dieser Entspiegelung ist aber physikalisch auf eine Oktave begrenzt und eignet sich nur für Entspiegelungen im sichtbaren Bereich, nicht aber für Entspiegelungen im breitbandigen solaren Spektrum.

Neben den üblichen Mehrfachbeschichtungen gibt es auch die Möglichkeit, eine Antireflexwirkung über eine Einfachbeschichtung zu generieren. In diesem Fall wird auf Glas eine sogenannte λ/4-Schicht aufgebracht, d.h. eine Schicht mit der optischen Dicke λ/4 (λ = Wellenlänge des eingestrahlten Lichtes), wobei der Brechungsindex der Schicht idealerweise den Wert

$$\sqrt{n_D(Glas) \cdot n_D(Luft)}$$

haben sollte. In diesem Fall löschen sich die Amplituden der reflektierten Wellen aus. Mit einem üblichen Brechungsindex von eisenarmen Glas mit $n_D = 1.5$ ergibt sich ein optimaler Brechungsindex der Antireflexschicht von 1.22. In diesem Fall ist die Reflexion einer elektromagnetischen Strahlung mit der Wellenlänge λ Null.

Die meistverwendete Antireflex-Einfachschicht dieser Art ist eine durch Aufdampfen aufgebrachte λ/4-Schicht aus $MgF_2$ mit einem Brechungsindex von 1.38. Die Restreflexion liegt in diesem Fall bei 1.2 % im Reflexionsminimum. Ein noch niedrigerer Brechungsindex ist mit haltbaren, dichten Schichten nicht erreichbar.

Poröse Beschichtungen bieten die Möglichkeit, den Brechungsindex einer Einfachschicht weiter zu reduzieren. Hierfür werden drei Methoden beschrieben: das Ätzen von Glas, das Aufbringen einer porösen Schicht und die Kombination aus poröser Schicht und einem Ätzvorgang.

Zum Ätzen eignen sich insbesondere solche Gläser, die eine Phasenseparation in der Matrix aufweisen, sodaß eine lösliche Phase mit dem Ätzmittel herausgelöst werden kann. US 40 19 884 beschreibt ein Verfahren zur Herstellung einer Antireflexschicht auf Borosilikatglas mit einer Reflexion von weniger als 2 % im Wellenlängenbereich von 0,4 - 2,0 mm durch Erhitzen des Borosilikatglases auf eine Temperatur von 630 - 660 °C für 1 - 10 Stunden, um durch eine Phasentrennung eine stabile Oberfläche zu erzeugen und anschließende Behandlung mit Flußsäure für 1 - 4 Stunden bei 630 - 660 °C. Nachteilig bei diesem Verfahren ist die Verwendung von Flußsäure und die mangelnde Homogenität der geätzten Schicht.

Aus US 4 535 026 ist außerdem das nachträgliche Ätzen von Gläsern, die zuvor mit einer porösen $SiO_2$-Schicht versehen werden, bekannt. Die hierfür verwendete Beschichtungslösung wird durch Umsetzung von Siliziumalkoxid mit Wasser und einem Katalysator in Alkohol erhalten. Die getrocknete Gelschicht wird erhitzt, um organische Bestandteile zu entfernen und eine hinreichende Abriebstabilität der Schicht zu generieren. Erhalten wird eine poröse $SiO_2$-Schicht, wobei jedoch ein nachträglicher Ätzvorgang notwendig ist, um die Poren zu vergrößern. Schließlich kann mit diesem Verfahren eine Antireflexschicht mit 0.1 % Restreflexion erhalten werden.

Die Herstellung einer Beschichtungslösung, mit der die Herstellung einer abriebstabilen, porösen $SiO_2$-Antireflexschicht gelingt, die nicht nachträglich geätzt werden muß, ist bislang nicht beschrieben worden. Es ist im Gegenteil ein allgemein akzeptiertes Vorgehen bei der Herstellung poröser Antireflexschichten, die $SiO_2$-Gelschichten lediglich Temperaturen bis zu 500 °C auszusetzen, um die Porosität der Schicht zu erhalten und ein Zusammensintern der Schicht, verbunden mit dem Verkleinern des Porenvolumens, zu vermeiden. Damit würde die Brechzahl der Schicht ansteigen und sich die Wirkung der Antireflexschicht verschlechtern (Sol Gel Science, C. J. Brinker, G. W. Scherer, Academic Press 1990, S. 583, 631). Die Temperaturbeaufschlagung der Gelschicht mit möglichst hohen Temperaturen ist jedoch notwendig, um über eine Vernetzung des Orthokieselsäure-Netzwerkes in der Schicht eine gute Abriebfestigkeit der Schicht zu erzielen. Cathro et al. beschreiben in Solar Energy 32, 1984, S. 573, daß ausreichend wischfeste $SiO_2$-Antireflexschichten auf Glas nur durch Temperaturbeaufschlagung von mindestens 500 °C zu erhalten wären. Moulton et al. weisen in US 2 601 123 sogar darauf hin, daß die Temperatur bei dem Tempern der Gelschicht im Erweichungsbereich des Glases liegen sollte.

Zur Herstellung von Sicherheitsglas sind sogar noch höhere Temperaturen erforderlich. Hierbei muß das Glas bei einer Temperatur von mindestens 600 °C, in der Regel sogar 700 °C erweicht werden, bevor es durch einen Abschreckprozeß vorgespannt wird.

In DE 198 28 231 wird ein Verfahren zur Abscheidung poröser optischer Schichten von Metalloxiden auf Gläsern, Keramiken oder Metallen beschrieben Ein wäßriges Sol oder Solgemisch wird mit Salzsäure auf einen pH-Wert von 2 eingestellt, mit einem Tensid versetzt und auf das zu beschichtende Substrat aufgebracht. Das beschichtete Substrat wird bei Temperaturen von 100 bis 550 °C getempert. Die erhaltenen Schichten besitzen keine ausreichende Abriebfestigkeit. Bei einem Abriebtest nach DIN EN 1096-2 weisen sie bereits nach 10 Hüben starke Beschädigungen auf.

Aufgabe der Erfindung ist es, eine Beschichtungslösung zur Herstellung einer Antireflexschicht mit einem Berechnungsindex von 1,25 - 1,40 bereitzustellen, die beim Tempern bei Temperaturen von über 700°C ihre Porosität beibehält und nicht sintert.

Erfindungsgemäß wird diese Aufgabe gelöst durch eine wäßrige Beschichtungslösung mit einem pH-Wert von 3 bis 8, enthaltend 0,5-5,0 Gew. % $[SiO_x(OH)_y]_n$-Partikel, wobei $0<y<4$ und $0<x<2$ ist, mit einer Partikelgröße von 10 nm bis 60 nm mit einer Toleranz von $\pm$ 10% und 0,005 bis 0,5 Gew.-%, bezogen auf die Beschichtungslösung, eines Tensidgemisches erhältlich durch hydrolytische Polykondensation von Tetraalkoxysilanen in einem wäßrig-alkoholisch-ammoniakalischen Medium bei Temperaturen zwischen 35 °C und 80 °C und anschließender Abtrennung von Ammoniak und Alkohol aus der erhaltenen Dispersion durch Wasserdampfdestillation und anschließender Zugabe eines Tensidgemisches aus 15 - 30 Gew.-% anionischen Tensiden, 5-15 Gew.-% nichtionischen Tensiden und weniger als 5 Gew.-% amphoteren Tensiden.

Die erfindungsgemäße Lösung ist für den Fachmann überraschend, weil aus dem Standardwerk der Sol-Gel-Technologie von C.J. Brinker und G.W. Scherer Sol-Gel Science, Academic Press 1990, Seite 104, Figur 5 bekannt ist, daß der PZC (point of zero charge) und IEP (isoelectric point) von $SiO_2$-Partikeln bei einem pH-Wert von 2 Null ist und damit die Stabilität des Sols am größten ist. Es war deshalb nicht zu erwarten, daß bei einem pH-Wert von größer als 3 das Sol noch eine ausreichende Stabilität besitzt.

Es ist bekannt, daß die Eigenschaften von Materialien, die über Sol-Gel-Verfahren erhalten werden, sehr stark vom pH-Wert abhängig sind. Deshalb ist es überraschend, daß die abgeschiedene Schicht eine so hohe Festigkeit besitzt, denn aus Untersuchungen von Klimentova ist bekannt (Sol-Gel Science, Seite 389), daß der Elastizitätsmodul von Gelschichten am isoelektrischen Punkt der $SiO_2$-Partikel am größten ist. Auch aus diesem Grund hätte der Fachmann den pH-Wert des Sols auf 2 eingestellt.

Weiterhin wird diese Aufgabe gelöst durch ein Verfahren zur Herstellung der Beschichtungslösung, durch

- Zugabe eines Tetraalkoxysilans in ein wäßrig-alkoholisch-ammoniakalisches Hydrolysegemisch bei Temperaturen zwischen 35 °C und 80 °C,
- Abtrennung von Ammoniak und Alkohol aus der erhaltenen Dispersion durch Wasserdampfdestillation und Einstellung des pH-Wertes auf 3 - 8 und
- Zugabe von 0,005 bis 0,5 Gew.-%, bezogen auf die Beschichtungslösung, eines Tensidgemisches aus 15 - 30 Gew.-% anionischen Tensiden, 5 - 15 Gew.-% nichtionischen Tensiden und weniger als 5 Gew.-% amphoteren Tensiden.

Gegenstand der Erfindung ist weiterhin eine abriebfeste, optisch transparente, reflexionsvermindernde Siliziumdioxidschicht auf Gläsern mit einer stufenlos einstellbaren Brechzahl von 1,25 bis 1,40.

Die erfindungsgemäße Beschichtungslösung ist innerhalb des bisherigen Beobachtungszeitraumes von etwa 2 Jahren stabil gegenüber Gelierung. Die Partikel in der Beschichtungslösung besitzen Kugelform mit mittleren Teilchendurchmessern von 10 nm bis 60 nm, bevorzugt 30 nm - 40 nm und besonders bevorzugt 35 nm bei einer Toleranz von $\pm$ 10 %. Gegenüber dem aus DE 198 28 231 bekannten wäßrigen Sol zeigt die erfindungsgemäße Beschichtungslösung einen deutlich geringeren Tyndall-Effekt, der ein Nachweis für eine geringe Agglomeration der Partikel in der Lösung ist. Die mit der Beschichtungslösung erhaltene poröse Schicht kann mit einer Brechzahl von 1,25 bis 1,40 eingestellt werden, so daß beispielsweise die Restreflexion einer beschichteten, eisenarmen Glasscheibe zwischen 0,02 - 1,6 % liegt. Die Lage des Reflexionsminimums kann durch Anpassung der Schichtdicke im Bereich von 500 - 800 nm leicht eingestellt werden.

Die Schicht zeigt eine für poröse Schichten außerordentlich gute mechanische Stabilität. Abriebversuche nach DIN EN 1096-2 ergeben nach 100 oder 500 Hüben lediglich eine Farbverschiebung, hervorgerufen durch eine leichte Verminderung der optischen Schichtdicke, jedoch keine Beschädigung der Schicht durch Kratzer. Diese Farbverschiebung ist meßtechnisch kaum erfaßbar. Die Schicht wird durch Reiben mit einem trockenen Tuch ebenfalls nicht beschädigt. Schichten, die aus Beschichtungslösungen mit bekannten Solen erhalten werden, zeigen beim gleichen Abriebtest eine starke Beschädigung der Schicht bereits nach 10 Hüben.

Kipptischuntersuchungen mit Schichten aus bekannten Solen zeigen, daß bei den erfindungsgemäß hergestellten Schichten die Haftreibung deutlich geringer ist.
Erfindungsgemäß beschichtete Glasscheiben können Temperaturen von über 700°C ausgesetzt werden, ohne daß die aufgetragene Schicht hierbei sintert und ein Verlust an Transmission zu beobachten ist. Der Härtungsprozeß wird dabei so ausgeführt, wie es der Herstellung von Sicherheitsglas entspricht. Das bedeutet, das beschichtete Glas wird bis zum Erweichungspunkt erhitzt und dann abgeschreckt. Schichten bekannter Sol-Gel-Systeme sintern ab einer Temperatur von etwa 550°C (Sol Gel Science, C.F. Brinker, G.W. Scherer, Academic Press 1990, S. 583, 631).

Infolge der hohen Porosität und der damit verbundenen niedrigen Brechzahl sowie der Abriebbeständigkeit der erfindungsgemäßen Schichten eignen sich diese besonders zur Herstellung von hochtransmissiven Glasscheiben für den Einsatz als Abdeckscheiben in solaren Energiesystemen, beispielsweise für Sonnenkollektoren und Solarzellen. Die solare Transmission als gewichtete Mittelung der Transmission über das gesamte solare Spektrum (Normspektrum AM 1,5 global) liegt bei 95%.

Die Herstellung der erfindungsgemäßen Beschichtungslösung erfolgt in drei Stufen. In einer ersten Stufe wird zunächst ein SiO$_2$-Sol durch hydrolytische Polykondensation von Tetraalkoxysilanen hergestellt.

Hierzu wird das Tetraalkoxysilan in ein wäßrig-alkoholisch-ammoniakalisches Hydrolysegemisch gebracht und intensiv durchmischt. Als geeignete Tetraalkoxysilane können alle problemlos hydrolysierbaren Kieselsäureorthoester aliphatischer Alkohole eingesetzt werden. In erster Linie kommen hierbei die Ester aliphatischer Alkohole mit 1-5 C-Atomen in Betracht, wie etwa von Methanol, Ethanol, n- oder i-Propanol sowie der isomeren Butanole und Pentanole. Diese können einzeln, aber auch im Gemisch eingesetzt werden. Bevorzugt sind die Kieselsäureorthoester der C$_1$-C$_3$-Alkohole, insbesondere Tetraethoxysilan. Das Hydrolysegemisch sollte neben aliphatischen Alkoholen einen Gehalt von etwa 0,05 mol/l bis etwa 8 mol/l Ammoniak und von etwa 1 mol/l bis etwa 25 mol/l Wasser enthalten. Als Alkoholkomponente sind geeignet aliphatische C$_1$-C$_5$-Alkohole, bevorzugt C$_1$-C$_3$-Alkohole wie Methanol, Ethanol und n- oder i-Propanol. Diese können einzeln, aber auch im Gemisch miteinander im Hydrolysegemisch vorliegen. Die Zugabe des Tetraalkoxysilans zum Hydrolysegemisch erfolgt vorzugsweise in einer Portion, wobei der Reaktand in reiner Form oder auch in Lösung in einem der genannten Alkohole vorliegen kann. Zur Erzeugung der SiO$_2$-Teilchen kann eine Konzentration von Tetraalkoxysilan im Hydrolysegemisch zwischen etwa 0,01 bis etwa 1mol/l gewählt werden. Nach dem Zusammenbringen der Reaktanden setzt die Reaktion sofort oder nach wenigen Minuten ein, was sich durch eine alsbaldige Opaleszenz des Reaktionsgemisches durch die entstehenden Teilchen zeigt. Nach im allgemeinen nicht mehr als 15 - 30 Minuten, in ungünstigen Spezialfällen auch länger, ist die Reaktion abgelaufen. Je nach Wahl der Reaktanden sowie ihrer Konzentrationen im Reaktionsgemisch lassen sich Teilchen mit mittlerem Durchmesser zwischen 10 nm und 60 nm erhalten.

Bevorzugt wird in diesem ersten Schritt des erfindungsgemäßen Verfahrens mit Reaktionsgemischen gearbeitet, die 10 mol/l - 25 mol/l Wasser, 0,1 mol/l bis 4,5 mol/l Ammoniak, 5 mol/l bis 25 mol/l Alkohol und 0,1 - 0,5 mol/l Tetraalkoxysilan enthalten. Man erhält hierbei Teilchen mit mittleren Durchmessern zwischen 10 nm und 60 nm. In diesem Stadium können dem Sol Proben entnommen werden, um die Teilchen beispielsweise mit Hilfe der Elektronenmikroskopie auf ihre Teilchengröße, Formtreue und Teilchengrößenverteilung zu untersuchen.

Als vorteilhaft hat sich erwiesen, die Reaktion zur Erzeugung der Primärteilchen bei höherer Temperatur durchzuführen. Günstig sind hierbei Temperaturen zwischen 35 °C und 80 °C, vorzugsweise zwischen 40 °C und 70 °C. Es zeigte sich, daß bei erhöhter Temperatur die Teilchengrößenstreuung abnimmt, allerdings auch die mittlere Teilchengröße. Bei niedrigeren Temperaturen, d. h. um Raumtemperatur, erhält man bei sonst gleichen Bedingungen größere Teilchen mit höherer Größenstreuung.

Die erste Stufe des erfindungsgemäßen Verfahrens ist in US 4 775 520 näher beschrieben.

Das erhaltene Sol wird mit verdünnter Salzsäure, Natronlauge oder Ammoniak auf einen pH-Wert zwischen 3 und 8, bevorzugt 5 - 6, eingestellt. Anschließend werden 0,005 - 0,5 Gew.-%, bevorzugt 0,05 - 0,2 Gew. %, bezogen auf die Beschichtungslösung, eines Tensidgemisches aus 15 - 30 Gew.-% anionischen Tensiden, 5 - 15 Gew.-% nichtionischen Tensiden und weniger als 5 Gew.-% amphoteren Tensiden zugesetzt.

Die Beschichtungslösung wird auf einen Feststoffgehalt von 1 - 3 Gew.-% eingestellt. Der Feststoffgehalt ist abhängig von der Art des Beschichtungsverfahrens. Geeignete Verfahren zum Aufbringen der Beschichtungslösung auf das Substrat sind Tauchverfahren, Sprühverfahren oder Rotationsbeschichtungsverfahren (spin-coating). Die Ziehgeschwindigkeiten bei Tauchverfahren liegen zwischen 0,5 - 50 cm/min.

In einer besonderen Ausführungsform der erfindungsgemäßen Beschichtungslösung werden 0,001-0,1 Gew.-%, bezogen auf die Beschichtungslösung, eines geeigneten Konservierungsmittels zugesetzt.

In einer weiteren Ausführungsform werden der Beschichtungslösung Lösungsmittel, beispielsweise niedere Alkohole mit einer Kettenlänge von C1 - C4 , Dioxan, Tetrahydrofuran, Aceton in einer Konzentration von 0,5 - 50 Gew.-% bezogen auf die Beschichtungslösung, beziehungsweise 2-Methoxy-1-propanol, 2-Butanon in einer Konzentration von 0,5 - 20 Gew.-%, bezogen auf die Beschichtungslösung, zugesetzt. Vorzugsweise wird Ethanol in einer Konzentration von 15 - 25 Gew.-% eingesetzt.

Die folgenden Beispiele sollen die Erfindung näher beschreiben, ohne sie jedoch zu begrenzen.

## Beispiel 1

Es wird ein Hydrolysegemisch, bestehend aus 4,9 l Wasser, 9,6 l Ethanol und 250 g 25 %-igem Ammoniak, bereitet. Zu diesem auf 70 °C temperierten Hydrolysegemisch gibt man bei intensiver Durchmischung in einer Portion 1250 g von gleichermaßen temperiertem Tetraethoxysilan. Man erhält ein SiO$_2$-Sol mit mittleren Teilchendurchmessern von 25 nm bei einer Toleranz von ± 10%. Anschließend wird das Reaktionsgemisch einer Wasserdampfdestillation unterzogen, um Alkohol und Ammoniak zu entfernen. Das erhaltene wäßrige SiO$_2$-Sol wird auf einen pH-Wert von 8 eingestellt und mit 0,2 Gew.-% eines Tensidgemisches bestehend aus 10.0 Gew.-% Fettalkoholethersulfat (C12/C14-Fettalkohol, 2 Mol E0), 5,6 Gew.-% Alkylbenzolsulfonat, 5,5 Gew.-% Fettalkoholethoxilat und 78,9 % Wasser versetzt.

**Beispiel 2**

Die nach Beispiel 1 erhaltene Beschichtungslösung wird durch einen 0,2 μm Filter filtriert und ohne weitere Zusätze für die nachfolgende Beschichtung durch dip-coating eingesetzt. Glasscheiben werden in einer handelsüblichen Laborspülmaschine bei über 90 °C unter Zusatz eines handelsüblichen Reinigungsmittels gereinigt. Das handelsübliche Reinigungsmittel enthält weniger als 5 Gew.-% Bleichmittel auf Chlorbasis, 15 - 30 Gew.-% Phosphate, 5 Gew.-% NaOH sowie Carbonate, Silikate und Sulfate. Anschließend werden die Glasscheiben in die Beschichtungslösung eingetaucht und mit einer Ziehgeschwindigkeit von 10 cm/min. herausgezogen.

Nach dem Ausziehen wird die Beschichtung im Luftstrom getrocknet und die beschichtete Glasplatte in einem Umluftofen bei 650 °C fünf Minuten getempert. Die beschichtete Glaspatte zeigt einen gleichmäßigen Farbton, was auf eine gleichmäßige Schichtdicke der Beschichtung hinweist.

Die Abriebfestigkeit der aufgebrachten Schicht wurde nach DIN EN 1096/2 geprüft. Nach 500 Hüben wurde lediglich eine Farbverschiebung festgestellt, die durch eine leichte Verminderung der optischen Schichtdicke hervorgerufen wurde. Die Schicht zeigte keinerlei Beschädigungen. Kratzer konnten nicht beobachtet werden.

**Patentansprüche**

1. Wäßrige Beschichtungslösung mit einem pH-Wert von 3 bis 8, enthaltend $[SiO_x(OH)_y]_n$-Partikel, wobei $0 < y < 4$ und $0 < x < 2$ ist, mit einer Partikelgröße von 10 nm bis 60 nm mit einer Toleranz von $\pm$ 10 % und ein Tensidgemisch, erhältlich durch hydrolytische Polykondensation von Tetraalkoxysilanen in einem wäßrig-alkoholisch-ammoniakalischen Medium bei Temperaturen zwischen 35 °C und 80 °C und anschließender Abtrennung von Ammoniak und Alkohol aus der erhaltenen Dispersion durch Wasserdampfdestillation und anschließender Zugabe eines Tensidgemisches aus 15 - 30 Gew.-% anionischen Tensiden, 5 - 15 Gew.-% nichtionischen Tensiden und weniger als 5 Gew.-% amphoteren Tensiden.

2. Beschichtungslösung nach Anspruch 1, worin die Konzentration der $[SiO_x(OH)_y]_n$-Partikel 0,5 - 5,0 Gew.-% beträgt.

3. Beschichtungslösung nach Anspruch 1 oder 2, worin die Konzentration des Tensidgemisches 0,005 bis 0,5 Gew.-%, bezogen auf die Beschichtungslösung, beträgt.

4. Beschichtungslösung nach einem der Ansprüche 1 bis 3, worin ein Lösemittel enthalten sind.

5. Beschichtungslösung nach einem der Ansprüche 1 bis 4, worin das Lösemittel in einer Konzentration von 0,5 - 50 Gew.-% enthalten ist.

6. Beschichtungslösung nach einem der Ansprüche 1 bis 5, worin 0,001 - 0,1 Gew.-% eines geeigneten Konservierungsmittels enthalten sind.

7. Verfahren zur Herstellung einer wäßrigen Beschichtungslösung nach Anspruch 1, durch

   - Zugabe eines Tetraalkoxysilans in ein wäßrig-alkoholischammoniakalisches Hydrolysegemisch bei Temperaturen zwischen 35 °C und 80 °C,
   - Abtrennung von Ammoniak und Alkohol aus der erhaltenen Dispersion durch Wasserdampfdestillation und Einstellung des pH-Wertes auf 3 - 8 und
   - Zugabe von 0,005 bis 0,5 Gew.-%, bezogen auf die Beschichtungslösung, eines Tensidgemisches aus 15 - 30 Gew.- % anionischen Tensiden, 5 - 15 Gew.-% nichtionischen Tensiden und weniger als 5 Gew.-% amphoteren Tensiden.

8. Verwendung der Beschichtungslösung nach den Ansprüchen 1 bis 6 zur Abscheidung von abriebfesten, porösen $SiO_2$-Schichten auf Glas.

9. Glas mit einer porösen Antireflexschicht aus Siliziumdioxid mit einer Brechzahl von 1,25 - 1,40, abgeschieden aus der Beschichtungslösung nach den Ansprüchen 1 bis 6.

**Claims**

1. Aqueous coating solution having a pH of 3 to 8, comprising $[SiO_x(OH)_y]_n$ particles, where $0 < y < 4$ and $0 < x < 2$, having a particle size of 10 nm to 60 nm with a tolerance of $\pm$ 10%, and a surfactant mixture obtainable by hydrolytic polycondensation of tetraalkoxysilanes in an aqueous-alcoholic-ammoniacal medium at temperatures between 35°C and 80°C, and subsequent removal of ammonia and alcohol from the resultant dispersion by steam distillation and subsequent addition of a surfactant mixture comprising 15 - 30% by weight of anionic surfactants, 5 - 15% by weight of nonionic surfactants and less than 5% by weight of amphoteric surfactants.

**2.** Coating solution according to Claim 1, in which the concentration of the $[SiO_x(OH)_y]_n$ particles is 0.5 - 5.0% by weight.

**3.** Coating solution according to Claim 1 or 2, in which the concentration of the surfactant mixture is 0.005 to 0.5% by weight, based on the coating solution.

**4.** Coating solution according to one of Claims 1 to 3, in which a solvent is present.

**5.** Coating solution according to one of Claims 1 to 4, in which the solvent is present in a concentration of 0.5 - 50% by weight.

**6.** Coating solution according to one of Claims 1 to 5, in which 0.001 - 0.1 % by weight of a suitable preservative is present.

**7.** Process for the preparation of an aqueous coating solution according to Claim 1, by

- addition of a tetraalkoxysilane to an aqueous-alcoholic-ammoniacal hydrolysis mixture at temperatures between 35°C and 80°C,
- removal of ammonia and alcohol from the resultant dispersion by steam distillation and adjustment of the pH to 3 - 8 and
- addition of 0.005 to 0.5% by weight, based on the coating solution, of a surfactant mixture comprising 15 - 30% by weight of anionic surfactants, 5 - 15% by weight of nonionic surfactants and less than 5% by weight of amphoteric surfactants.

**8.** Use of the coating solution according to Claims 1 to 6 for the deposition of abrasion-resistant, porous $SiO_2$ layers on glass.

**9.** Glass having a porous antireflection layer of silicon dioxide having a refractive index of 1.25 - 1.40, deposited from the coating solution according to Claims 1 to 6.

**Revendications**

**1.** Solution de revêtement aqueuse présentant un pH de 3 à 8, comprenant des particules de $[SiO_x(OH)_y]_n$, où $0 < y < 4$ et $0 < x < 2$, présentant une taille de particule de 10 nm à 60 nm avec une tolérance de $\pm$ 10%, et un mélange de surfactants pouvant être obtenu par polycondensation hydrolytique de tétraalkoxysilanes dans un milieu ammoniacal-alcoolique aqueux à des températures entre 35°C et 80°C, et ensuite par enlèvement de l'ammoniac et de l'alcool de la dispersion résultante par distillation à la vapeur et ensuite addition d'un mélange de surfactants comprenant 15 - 30% en poids de surfactants anioniques, 5 - 15% en poids de surfactants non ioniques et moins de 5% en poids de surfactants amphotériques.

**2.** Solution de revêtement selon la revendication 1, dans laquelle la concentration des particules de $[SiO_x(OH)_y]_n$ est de 0,5 - 5,0% en poids.

**3.** Solution de revêtement selon la revendication 1 ou 2 dans laquelle la concentration du mélange de surfactants est de 0,005 à 0,5% en poids sur la base de la solution de revêtement.

**4.** Solution de revêtement selon l'une quelconque des revendications 1 à 3, dans laquelle un solvant est présent.

**5.** Solution de revêtement selon l'une quelconque des revendications 1 à 4, dans laquelle le solvant est présent selon une concentration de 0,5 - 50% en poids.

**6.** Solution de revêtement selon l'une quelconque des revendications 1 à 5, dans laquelle un conservateur approprié est présent selon 0,001 - 0,1% en poids.

**7.** Procédé pour la préparation d'une solution de revêtement aqueuse selon la revendication 1, par

- addition d'un tétraalkoxysilane à un mélange d'hydrolyse ammoniacal - alcoolique aqueux à des températures entre 35°C et 80°C,
- enlèvement de l'ammoniac et de l'alcool de la dispersion résultante par distillation à la vapeur et réglage du pH à 3 - 8 et
- addition de 0,005 à 0,5% en poids, sur la base de la solution de revêtement, d'un mélange de surfactants comprenant 15 - 30% en poids de surfactants anioniques, 5 - 15% en poids de surfactants non ioniques et moins de 5% en poids de surfactants amphotériques.

**8.** Utilisation de la solution de revêtement selon les revendications 1 à 6 pour le dépôt de couches de $SiO_2$ poreuses et résistant à l'abrasion sur du verre.

**9.** Verre comportant une couche antireflet poreuse en dioxyde de silicium présentant un indice de réfraction de 1,25 - 1,40, déposée à partir de la solution de revêtement selon les revendications 1 à 6.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4019884 A
- US 4535026 A
- DE 19828231
- US 4775520 A

### In der Beschreibung aufgeführte Nicht-Patentliteratur

- **C. J. BRINKER ; G. W. SCHERER.** Sol Gel Science. Academic Press, 1990, 583, 631
- **CATHRO et al.** *Solar Energy,* 1984, vol. 32, 573
- **C.J. BRINKER ; G.W. SCHERER.** Sol-Gel Science. Academic Press, 1990, 104
- **C.F. BRINKER ; G.W. SCHERER.** Sol Gel Science. Academic Press, 1990, 583, 631